Europäisches Patentamt

(19) European Patent Office

Office européen des brevets

(11) Numéro de publication: **0 252 788 B1**

(12) **FASCICULE DE BREVET EUROPEEN**

(45) Date de publication de fascicule du brevet:
10.04.91

(51) Int. Cl.⁵: **G21C 7/12**

(21) Numéro de dépôt: 87401371.7

(22) Date de dépôt: 18.06.87

(54) **Dispositif d'entrainement de barre de commande de réacteur nucléaire, à clapet mobile.**

(30) Priorité: 27.06.86 FR 8609385

(43) Date de publication de la demande:
13.01.88 Bulletin 88/02

(45) Mention de la délivrance du brevet:
10.04.91 Bulletin 91/15

(84) Etats contractants désignés:
BE CH DE ES GB IT LI NL SE

(56) Documents cités:
DE-A- 1 911 057
DE-A- 1 951 418
FR-A- 2 523 358
US-A- 3 940 311

(73) Titulaire: FRAMATOME
Tour Fiat 1, Place de la Coupole
F-92400 Courbevoie(FR)

(72) Inventeur: Savary, Fernand
14 rue Prince de Condé
F-95200 Saint Leu la Forêt(FR)

(74) Mandataire: Fort, Jacques et al
CABINET PLASSERAUD 84, rue d'Amsterdam
F-75009 Paris(FR)

**Description**

L'invention a pour objet un dispositif d'entraînement de barre de contrôle pour réacteur nucléaire refroidi par un fluide sous pression, du type comprenant un guide de barre placé au-dessus du coeur, un carter contenant un mécanisme moteur et relié à l'intérieur du réacteur par un fourreau de traversée étanche du couvercle d'une cuve contenant le coeur, un arbre de commande déplaçable verticalement dans le fourreau, reliant le mécanisme à la barre et traversant, avec un jeu radial, une plaque supérieure de fermeture du guide, ainsi qu'une manchette de protection thermique, interposée radialement entre l'arbre et le fourreau et ayant un embout terminal pouvant se rapprocher et s'éloigner de ladite plaque supérieure.

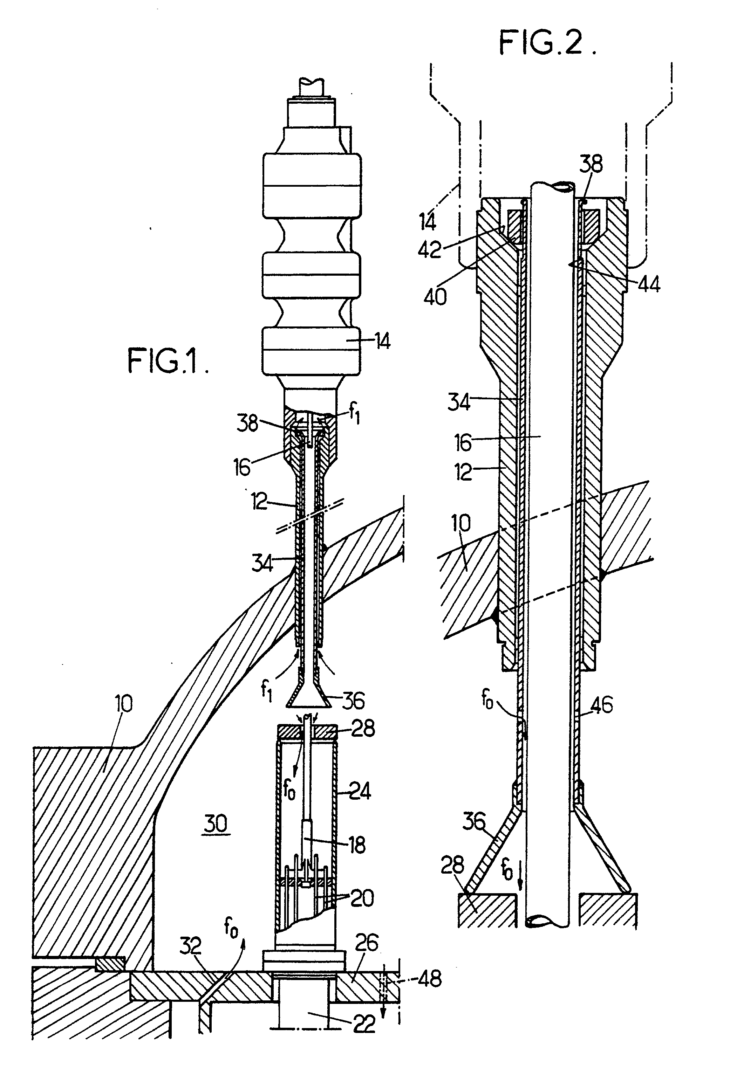

Des dispositifs du type défini ci-dessus sont déjà prévus sur des réacteurs à eau sous pression, tels que certains de ceux réalisés par la demanderesse. La Figure 1 montre, à titre d'exemple, un tel dispositif équipant un réacteur nucléaire comportant une cuve fermée par un couvercle supérieur 10. Chacun des dispositifs comporte un fourreau 12 traversant de façon étanche le couvercle 10, débouchant par le bas dans la cuve et par le haut dans un carter 14 contenant un mécanisme d'entraînement de barre de contrôle. Ce mécanisme, par exemple du type électromécanique bien connu, est relié à une tige 16 qui se raccorde au pommeau 18 de la barre de contrôle, constitué par une grappe de crayons 20 de matériau absorbant les neutrons. La grappe est guidée dans ses déplacements par un guide inférieur 22 et un tube guide 24. Le guide 22 et le tube guide 24, placés en alignement l'un de l'autre, sont fixés à une plaque supérieure 26 portée par la cuve et appartenant aux équipements internes supérieurs du réacteur. Le tube guide 24 est fermé à sa partie supérieure par une plaque 28 dans laquelle est ménagé un trou de passage de l'arbre 16, trou qui laisse à l'arbre un jeu notable (pratiquement de l'ordre de 7 mm au rayon) nécessaire à un fonctionnement mécanique correct.

Dans un tel réacteur, l'eau légère constituant réfrigérant et modérateur traverse le coeur de bas en haut pour extraire l'énergie fournie par le combustible, puis s'échappe par une tubulure latérale de la cuve (non représentée) située au niveau des guides de grappe 22. La plaque 26 sépare l'espace dans lequel le réfrigérant change de direction pour s'échapper par la tubulure de sortie d'un autre espace 30, fréquemment dénommé "ciel de cuve". Dans le mode de réalisation montré en Figure 1, ce ciel de cuve est maintenu en légère surpression, par rapport à l'espace situé au-dessous de la plaque 26, par exemple par arrivée d'eau depuis la tubulure d'entrée dans le coeur, par des passages 32 ménagés dans la plaque 26. L'eau en surpression dans le ciel de cuve 30 tend à s'écouler vers l'espace situé au-dessous de la plaque 26 en court-circuitant le coeur, suivant le trajet indiqué par les flèches fo. Ce débit traversant les guides de grappes 24 constitue une source d'excitation vibratoire des tiges de commande des grappes et provoque une usure des gaines des crayons absorbants au droit des "cartes" transversales de guidage prévues dans le guide 22. Cet écoulement non modulable tend à diminuer le rendement thermique du réacteur, mais il n'est pas possible de le réduire en diminuant le jeu offert par la plaque 28 au-delà d'une limite due à des impératifs mécaniques.

De plus, le ciel de cuve tend à être le siège de courants de convection thermique vers les carters 14. Ces courants, provoqués par un effet de thermosiphon, augmentent les pertes thermiques à partir des carters de mécanisme.

Pour réduire les pertes thermiques et protéger le fourreau 12 à la traversée du couvercle, on a déjà proposé de placer une manchette de protection thermique 34 entre le fourreau 12 et l'arbre de commande 16. Cette manchette est déplaçable axialement entre la position haute où elle est représentée sur la figure 1 et une position basse où une collerette supérieure 38 prend appui sur un siège prévu à la sortie du carter 14. Dans cette dernière position, un embout inférieur 36, en forme de tulipe, de la manchette 34 se trouve à proximité de la plaque 28. En cas de chute de barre, la dépression créée à la partie supérieure du carter 14 par la descente de la tige 16 soulève la manchette et ouvre un passage d'équilibrage des pressions par entrée d'eau suivant le trajet indiqué par les flèches f1.

Cette solution est loin d'être pleinement satisfaisante. La chute de la barre est retardée jusqu'à ce que la dépression dans le carter 14 ait atteint une valeur suffisante pour équilibrer le poids de la manchette 34. Les courants de convection thermique à l'intérieur du mécanisme de grappe restent anarchiques et dépendent des surchauffes locales.

On a également proposé (DE-A-1 951 418) un dispositif de commande de barre de contrôle ayant une tige annulaire de commande déplaçable verticalement dans un carter traversant le couvercle de cuve. Pour limiter les courants de convection qui s'établissent dans un circuit comportant l'espace annulaire entre tige et, carter et l'espace intérieur de la tige par des orifices latéraux ménagés rue la tige, un tiroir d'obturation en cas de recul de la tige est prévu, cette disposition n'apporte qu'un remède très partiel au problème.

Le document US-A-3 940 311 montre une tulipe portée par l'adaptateur d'un mécanisme de commande de barre. Un ressort tend à appliquer la tulipe contre la plaque de base d'une colonne que peut traverser la barre de commande. La tulipe ne comporte pas de trous de passage de réfrigérant. Il n'est pas question d'un clapet distinct de la tulipe.

Le document DE-A-1 911 057 décrit encore un autre mécanisme de commande du type ci-dessus défini, si ce n'est que rien ne permet de supposer que la chemise montrée en figure 2 du document est une manchette ayant la constitution et la fonction de celle de l'invention.

L'invention vise à fournir un dispositif d'entraînement de barres de contrôle répondant mieux que ceux antérieurement connus aux exigences de la pratique, notamment en ce qu'il réduit les pertes thermiques par convection sans pour autant retarder la chute des barres en cas de commande d'urgence ; elle vise également à réduire le débit fo d'eau dans les guides de grappe et les vibrations qu'il engendre, ce débit restant limité à celui nécessaire pour le refroidissement des crayons de grappe.

Dans ce but, l'invention propose notamment un dispositif tel que défini dans la revendication 1.

Grâce à cette disposition, la mise en communication du fond du carter de mécanisme avec le ciel de cuve en cas de chute de grappe est beaucoup plus rapide, car le poids du clapet représente une fraction très faible du poids de la manchette. Il est possible d'ajuster aisément le débit qui court-circuite le coeur, par modification de la section du passage, ce qui permet notamment un équilibrage entre les différents dispositifs. Le débit de circulation provoqué par effet de thermosiphon dans le mécanisme est considérablement réduit, ainsi que les pertes thermiques qui en résultent.

Le passage peut être constitué par au moins un trou d'admission percé dans la manchette, au-dessus de l'embout. L'eau de refroidissement s'écoulant vers l'espace situé audessous de la plaque supérieure de fermeture du guide constitue un barrage aux courants de convection thermique qui tendent à s'établir vers le mécanisme. Le débit fo ainsi régulé, il est possible d'ajuster le débit qui court-circuite le coeur par une série de trous calibrés percés dans la plaque supérieure des internes superieurs. Un avantage de ce complément de débit de contournement est de permettre d'utiliser la capacité d'eau du ciel de cuve pour le refroidissement du coeur en cas de rupture du circuit primaire.

L'invention sera mieux comprise à la lecture de la description qui suit d'un mode particulier d'exécution donné à titre d'exemple non limitatif. La description se réfère aux dessins qui l'accompagnent, dans lesquels :

- la Figure 1, déjà mentionnée, est une vue en élévation et en coupe partielle, d'un dispositif antérieur de commande de barre de contrôle ;

- la Figure 2 est une vue à grande échelle et en coupe suivant un plan vertical passant par son axe de la partie concernée par l'invention d'un dispositif d'entraînement de barre de contrôle.

Le dispositif suivant l'invention peut avoir une constitution générale similaire à celle montrée en Figure 1 et les éléments correspondants des Figures 1 et 2 sont en conséquence désignés par le même numéro de référence.

A la différence de celle montrée en Figure 1, la manchette thermique 34 du dispositif de la Figure 2 est prévue pour prendre appui, au repos, sur la plaque 28 du tube guide par son embout 36 en forme de tulipe. Elle présente à sa partie supérieure une collerette 38 qui n'a plus qu'un rôle de butée limitant la levée d'un clapet 40. Ce clapet 40 présente une surface inférieure d'allure générale torique destinée à s'appuyer sur un siège tronconique 42 ménagé dans le fourreau 12 ou à la partie basse du carter 14.

Le poids du clapet 40 tend à l'appliquer de façon sensiblement étanche sur son siège. Son déplacement vers le haut par rapport à la manchette 34 est limité par sa venue en butée contre la collerette 38. La manchette 34 comporte un épaulement 44 dirigé vers le haut et soulevant le clapet 40 de son siège si la levée de la manchette à partir de sa position de repos dépasse une amplitude prédéterminée.

Par ailleurs, la manchette 34 est percée, au-dessous du fourreau 12, d'un passage pouvant être constitué par des trous calibrés 46 autorisant le passage d'eau du ciel de cuve 30 vers le guide inférieur 22. L'absence de jeu entre l'embout en forme de tulipe 36 et la plaque de fermeture 28 par leur accostage permanent permet d'ajuster à une valeur convenable le débit qui circule ainsi en court-circuitant le coeur et de l'équilibrer entre les divers dispositifs d'entraînement de barre.

Lors de la levée d'une barre ou du maintien de cette barre, la présence du clapet fermé 40 évite la formation par thermosiphon de courants de convection parcourant l'intervalle situé entre le fourreau 12 et la manchette thermique 34. L'appui de l'embout 36 sur la plaque 28 et la présence des trous 46 se traduisent par un appel d'eau qui tend à éviter la remontée d'eau à haute température vers le carter 14 et diminue ainsi les pertes thermiques.

En cas de chute de barre, le clapet 40 s'ouvre quasi instantanément lorsqu'une dépression apparaît au-dessus de la tige d'entraînement 16. L'eau provenant du ciel de cuve peut ainsi s'écouler vers le mécanisme en évitant l'apparition d'une différence de pression notable ralentissant la chute de la barre. L'embout 36 peut par ailleurs se soulever dès que la différence de pression subie par la manchette thermique se traduit par une force ascendante dépassant son poids, facilitant encore la chute de la barre.

La réduction du débit de court-circuit qu'implique la mise en oeuvre de l'invention est défavorable au maintien d'un refroidissement suffisant du coeur en cas de rupture du circuit primaire. Pour écarter cet inconvénient, qui d'ailleurs n'existe que dans des conditions exceptionnelles, il est possible de prévoir des passages 48 à travers la plaque supérieure 26. Grâce à ces trous, dont un est représenté en Figure 1, l'eau contenue dans le ciel de cuve 30 peut pénétrer dans le coeur en cas de rupture provoquant une perte de réfrigérant primaire.

L'invention ne se limite pas au mode particulier de réalisation qui a été représenté et décrit à titre d'exemple. Elle est susceptible de diverses variantes dans le cadre des revendications. Par ailleurs, le dispositif est applicable à des barres de commande constituant non pas une barre de pilotage, mais une barre d'autre nature (notamment barre de compensation ou barre de variation du spectre d'énergie des neutrons).

## Revendications

1. Dispositif d'entraînement de barre de contrôle de réacteur nucléaire refroidi par un fluide sous pression, comprenant : un guide de grappe (24) placé au-dessus du coeur ; un carter (14) contenant un mécanisme moteur et relié à l'intérieur du réacteur par un fourreau (12) de traversée étanche du couvercle (10) d'une cuve contenant le coeur ; un arbre de commande (16) déplaçable verticalement dans le fourreau, reliant le mécanisme à la barre (20) et traversant, avec un jeu radial, une plaque supérieure (28) de fermeture du guide ; une manchette de protection thermi-que (34), interposée radialement entre l'arbre et le fourreau et ayant un embout terminal (36) pouvant se rapprocher et s'éloigner de ladite plaque supérieure (28), ladite manchette étant prévue pour prendre appui par son embout terminal sur la plaque supérieure et percée, au-dessous du fourreau (12), d'un passage calibré d'entrée de fluide dans le guide par le jeu ; et un clapet anti-retour (40) disposé entre la manchette et le fourreau, déplaçable verticalement par rapport à eux et coopèrant avec un siège du fourreau pour n'autoriser la circulation de fluide que vers le mécanisme moteur.

2. Dispositif selon la revendication 1, caractérisé en ce que le passage est constitué par au moins un trou d'admission (46) percé dans la manchette, au-dessus de l'embout.

3. Dispositif selon la revendication 1 ou 2, caractérisé en ce que la manchette comporte des moyens de butée (38) limitant la course du clapet à partir de son siège.

4. Dispositif selon la revendication 1, 2 ou 3, caractérisé en ce que la manchette (34) est munie d'un épaulement (44) de soulèvement du clapet (40) à partir de son siège lorsque le déplacement de la manchette à partir d'une position d'appui de son embout sur la plaque supérieure (28) dépasse une valeur déterminée.

5. Dispositif selon l'une quelconque des revendications précédentes, caractérisé en ce que le guide (24) est fixé à une plaque supérieure (26) appartenant aux équipements internes supérieurs du réacteur, percée de trous (48) de communication du coeur avec le volume (30) situé audessus de ladite plaque (26) de trous (32)de communication dudit volume (30) avec la tubulure d'entrée du fluide dans la cuve.

## Claims

1. A control bar drive device for a pressurized fluid cooled nuclear reactor, comprising: a cluster guide (24) located above the core; a casing (14) containing a drive mechanism and connected to the inside of the reactor by a sheath (12) projecting sealingly through the lid (10) of a vessel containing the core; a drive shaft (16) vertically movable within the sheath, connecting the mechanism to the bar (20) and projecting with a radial clearance through an upper plate (28) closing the guide; a thermal protection sleeve (34) interposed radially between the shaft and the sheath and having an end piece (36) movable toward and away from said upper plate (28), said sleeve being arranged for abutting the upper plate through its end portion and being formed, below the sheath (12), with a calibrated passage for allowing fluid to enter the guide through the clearance; and a non-return check valve (40) located between the sleeve and the sheath, vertically movable with respect thereto and cooperating with a seat of the sheath for authorizing a fluid flow only toward the drive mechanism.

2. Device according to claim 1, characterized in that the passage consists of at least one inlet hole (46) formed in the sleeve, above the end piece.

3. Device according to claim 1 or 2, characterized in that the sleeve includes stop means (38) for limiting the travel of the valve away from its seat.

4. Device according to claim 1, 2 or 3, characterized in that the sleeve (34) is formed with a shoulder (44) for lifting the valve (40) clear from its seat when the extent of movement of the sleeve from a position where its end portion is in abutment against the upper plate (28) exceeds a predetermined value.

5. Device according to any one of the preceeding claims, characterized in that the guide (24) is secured to an upper plate (26) belonging to the upper internals of the reactor, formed with holes (48) communicating the core with the volume (30) located above said plate (26) and with holes (32) for communicating said volume (30) with the nozzle for input of the fluid into the vessel.

## Ansprüche

1. Antriebsvorrichtung für einen Regelstab eines Druckfluid gekühlten Kernreaktors, mit einer oberhalb des Kerns angeordneten Bündelführung (24), einem Gehäuse (14), das einen Antriebsmechanismus enthält und mit dem Inneren des Reaktors über eine dichte Stülpmanschette des Deckels (10) eines Behälters verbunden ist, der den Reaktorkern enthält, einer vertikal in der Stülpmanschette verschiebbaren Steuerwelle (16) die den Antriebsmechanismus mit der Stange (20) verbindet und mit einem Radialspiel eine obere Platte (28), die die Führung abschließt, durchquert, einer thermischen Schutzmanschette (34), die radial zwischen der Welle und der Stülpe angeordnet ist mit einem Endteil (36) das sich der oberen Platte (28) nähern und sich von dieser entfernen kann, wobei die Manschette vorgesehen ist, um mit seinem Endteil auf der oberen Platte aufzuliegen und unterhalb der Stülpe (12) mit einer kalibrierten Öffnung durchbohrt ist, als Fluideinlaß in die Führung über das Spiel und mit einer zwischen der Manschette und der Stülpe angeordneten Rückschlagklappe (40), die vertikal gegenüber der Manschette und der Stülpe verschiebbar ist und mit einem Sitz der Stülpe zusammenwirkt, um den Fluidfluß nur in Richtung auf den Antriebsmechanismus hin durchzulassen.

2. Vorrichtung nach Anspruch 1, dadurch gekennzeichnet, daß der Durchlaß aus mindestens einer Einlaßöffnung (46) besteht, die in die Manschette oberhalb des Endes angeordnet ist.

3. Vorrichtung nach Anspruch 1 oder 2, dadurch gekennzeichnet, daß die Manschette Anschläge (38) aufweist, die den Hub der Klappe ausgehend von dessen Sitz begrenzt.

4. Vorrichtung nach Anspruch 1, 2 oder 3, dadurch gekennzeichnet, daß die Manschette (34) mit einer Schulter (44) zum Anheben der Klappe (40) versehen ist, ausgehend von seinem Sitz, während die Verschiebung der Manschette ausgehend von einer Anlagestellung ihres Endes auf der oberen Platte (28) einen vorbestimmten Wert überschreitet.

5. Vorrichtung nach einem der vorstehenden Ansprüche, dadurch gekennzeichnet, daß die Führung (24) an einer oberen Platte (26) befestigt ist, die zu den oberen inneren Ausrüstungen des Reaktors gehört und mit Löchern (48) durchbohrt ist, die den Kern mit dem Volumen (30) verbinden, das oberhalb der Platte (26) gelegen ist und mit Löchern (32), die das Volumen mit dem Eingangsbohrsystem des Fluids in den Behälter verbinden.

FIG.1.

FIG.2.